# EUROPÄISCHE PATENTANMELDUNG

(11) **EP 0 812 995 A2**
(43) Veröffentlichungstag der Anmeldung: **17.12.1997**
(21) Anmeldenummer: 97109056.8
(22) Anmeldetag: 04.06.1997
(51) Int. Cl.: F16C 32/06

(54) **Aerostatisches Lagersystem mit Umgriff**

(30) Priorität: 04.06.1996 DE 29609879 U; 02.01.1997 DE 19700058
(71) Anmelder: FÜRSTLICH HOHENZOLLERNSCHE WERKE LAUCHERTHAL GMBH & CO., D-72517 Sigmaringendorf-Laucherthal (DE)
(72) Erfinder: Eisenmann, Siegfried, 88326 Aulendorf (DE)
(74) Vertreter: Marx, Lothar, Dr.

(57) **Zusammenfassung**

Die Erfindung betrifft ein aerostatisches Lagersystem mit Umgriff, mit einer Welle (1) oder einer Tragleiste und einem eine Lagerfläche (3) für die Welle (1) oder die Tragleiste aufweisenden Lagerkörper (10), mit Lagertragtaschen (2,2') in der Lagerfläche (3), mit Luft-Zuführdrosseleinrichtungen (5,5') für die Lagertragtaschen (2,2') und mit Abflußspalten (7,7'), die durch um die Lagertragtaschen (2,2') angeordnete Taschenstäge (6,6') gebildet werden. Hierbei werden die Luft-Zuführdrosseleinrichtungen (5,5') durch wenigstens einen Lagerspalt (8a) zwischen der Welle (1) oder der Tragleiste und der Lagerfläche (3) des Lagerkörpers (10) gebildet. Die Luft-Zuführdrosseleinrichtungen (5,5') sind jeweils auf den Gegenseiten ihrer zugehörigen Lagertragtasche (2,2') in Dämpfertaschen (8,8') neben den Lagertragtaschen (2,2') angeordnet. Sowohl in den Lagertragtaschen (2,2') als auch in den Dämpfertaschen (8,8') sind von der Luft durchströmte und als Sqeeze-Flächen wirksame Dämpferplateaus (9,9', 11,11') ausgebildet.

## Beschreibung

Die Erfindung betrifft ein aerostatisches Lagersystem nach dem Oberbegriff von Anspruch 1.

Luftlager haben den Vorteil einer sehr geringen Reibung, der unproblematischen Anwendung bei hochpräzisen Meßeinrichtungen und Werkzeugmaschinen, der Umweltfreundlichkeit und des geringsten Energieaufwandes. Wegen der zwangsläufig notwendigen äußerst kleinen Luftspalte werden mit Luftlagerungen hohe Steifigkeiten erzielt, die mit Wälzlagerungen und hydrostatischen Lagerungen durchaus wettbewerbsfähig sind. Zwar steht das Medium Druckluft in der Regel nur bis zu einem Zuführdruck von ca. 10 bar zur Verfügung, in den Luftnetzversorgungseinrichtungen der Fertigung meistens nur bis zu einem Luftdruck von 5 bar. Dieser zur Verfügung stehende begrenzte Luftdruck reduziert die Tragfähigkeit von Luftlagerungen sehr stark, so daß diese Tragsysteme sich beispielsweise bei Werkzeugmaschinen in erster Linie für die Feinstbearbeitung eignen. Die Betriebsviskosität der Luft liegt nur etwa bei einem Tausendstel der Betriebsviskosität von Öl, so daß die Newtonsche Schubspannung im Luftspalt bei hohen Relativgeschwindigkeiten der Gleitflächen entsprechend gering ist. Dies ermöglicht Lagerumfangsgeschwindigkeiten trotz sehr engen Spaltes in der gleichen Höhe wie bei ölgeschmierten Lagern; in vielen Fällen sind sie sogar höher. Wegen der zunehmenden Bedeutung der Hochgeschwindigkeitszerspanung und der Forderung nach Hoch- und Ultrapräsisionsfertigung von technischen Produkten des täglichen Lebens, steigt die Forderung nach Luftlagerungen hoher Umfangsgeschwindigkeiten und hoher Tragfähigkeit. Wegen des äußerst geringen Laufspiels solcher Lagerungen ist oft die elastische Nachgiebigkeit der Umgebungsteile, vor allen Dingen beispielsweise der Wellen und der Axialfunktionsflächen, störend und reduziert die Belastbarkeit solcher Systeme.

Ein großes Problem bei Luftlagerungen ist die äußerst geringe Dämpfungskraft des Luftfilms zwischen den Gleitflächen wegen der niedrigen dynamischen Viskosität des Luftfilms. Man benötigt deshalb große wirksame Dämpfungsflächen, die in der Lage sind, zusammen mit dem Medium Luft sogenannte Squeeze-Dämpfungskräfte aufzubauen, wenn sich die Gleitflächen aufeinander zu bewegen. Ein weiteres emsthaftes Problem bei Luftlagerungen ergibt sich aus der Kompressibilität der Luft. Gehärtete Wälzkörper und hydrostatische Schmierfilme sind im Vergleich zur Luft nahezu inkompressibel, so daß dort sehr hohe dynamische Steifigkeiten erzielbar sind. Luftlagerungen hingegen neigen durch die starke Kompressibilität des Schmierfilms zu selbsterregten Schwingungen, den sogenannten Airhammer. Oft genügen kleine turbulente Initialschwingungen der Luftversorgungskanäle und Drosseln, diese Airhammer auszulösen. Die Amplituden solcher Schwingungen können die Größe der Dicke des Luftspaltes erreichen.

Konventionelle aerostatische Lagerungen benutzen in der Regel feine Düsen als Vordrossel für das Tragsystem. Hinter der Düse muß wegen des turbulenten Luftstroms durch die Düse ein Beruhigungsvolumen vorgesehen werden. Diese Beruhigungskammern dürfen jedoch andererseits wegen der Gefahr eines zu nachgiebigen, kompressiblen Luftvolumens nicht zu groß sein. Die für das aerostatische Tragsystem erforderlichen Vordrosseln sollten möglichst laminar arbeiten und möglichst wenig Initialschwingungen erzeugen.

Die Düsen und deren Beruhigungskammern werden mehr oder weniger gleichmäßig verteilt über großflächige, stark dämpfend wirkende Lufttragflächen, in denen sich die Luft entspannt herab bis zum Atmosphärendruck. Wegen des großen Durchflußwiderstandes dieser hochgedämpften Tragflächen ist der mögliche Luftdurchsatz begrenzt. Bei thermostabilen Systemen ist zu fordern, daß die Reibleistung in der Lagerung durch die Erwärmung des durch sie fließenden Mediums selbst abgeführt wird. Bei großen Reibungsflächen und bei kleinen durchgeführten Luftmengen ist somit die mögliche Relativgeschwindigkeit in den Lagerflächen verhältnismäßig niedrig. In der Praxis wird gefordert, daß die Lufterwärmung etwa im Bereich von 10 bis 15 °C liegt. Wegen des begrenzten Applikationsdruckes der Luft, den erforderlichen engen Laufspalten und den großen Dämpfungsflächen kann die durchgesetzte Luftmenge nicht beliebig gesteigert werden.

Der Erfindung liegt die Aufgabe zugrunde, die Steifigkeit und die Dämpfungseigenschaften von gattungsgemäßen Lagern zu verbessern.

Diese Aufgabe wird durch den Gegenstand von Anspruch 1 gelöst.

Erfindungsgemäß werden Luft-Zuführdrosseleinrichtungen für in eine Lagerfläche eines Lagerkörpers eingearbeitete Lagertragtaschen durch wenigstens einen Lagerspalt zwischen einem gelagerten Körper und der Lagerfläche seines Lagerkörpers jeweils auf der Gegenseite ihrer zugehörigen Lagertragtasche gebildet. Mit Gegenseite ist in diesem Zusammenhang die Seite der Lagerfläche gemeint, die bei einer Verlagerung der Welle auf der der Verlagerungsrichtung entgegengesetzten Seite der Lagerfläche liegt. Durch diese Ausbildung der Luft-Zuführdrosseleinrichtungen und deren Anordnung zu den Lagertragtaschen wird eine veflagerungsabhängige Gegenkopplung der Lagertragtaschen und ihren Luft-Zuführdrosseleinrichtungen geschaffen, wodurch die Steifigkeit des aerostatischen Lagersystems wesentlich erhöht wird, insbesondere in der Nähe der zentrischen Lage des Lagersystems. Unter zentrischer Lage wird im Falle einer Wellenradiallagerung ein exakt konstanter Luftspalt über den gesamten Umfang der Welle verstanden.

Die Erfindung ist jedoch nicht grundsätzlich auf die Lagerung von Wellen, also auf Drehlagerungen beschränkt, sondern kann mit Vorteil auch bei Linearlagern oder auch als reines statisches Tragsystem eingesetzt werden. Der Begriff Welle steht nachfolgend der sprachlichen Einfachheit wegen jedoch auch für einen nicht drehgelagerten Körper, beispielsweise eine Tragleiste, eines Lagersystems für linear oder gar nicht gegeneinander bewegte Körper. Gegenstand der Ansprüche sind auch solche Lagersysteme.

Erfindungsgemäß sind die Luft-Zuführdrosseleinrichtungen in Dämpfertaschen angeordnet, die neben den Lagertragtaschen auf den Gegenseiten ihrer zugehörigen Lagertragtaschen vorgesehen sind. Sowohl in den Lagertragtaschen als auch in den Dämpfertaschen sind von der Luft durchströmte und als Squeeze-Flächen dämpfend wirksame Dämpferplateaus ausgebildet. Hierdurch wird die Dämpfung des erfindungsgemäßen Lagersystems gegenüber bekannten aerostatischen Lagersystemen deutlich verbessert.

Eine besonders gute Dämpfung wird erzielt, wenn die Dämpferplateaus in den Lagertragtaschen und Dämpfertaschen mit der Lagerfläche ebenbearbeitete Plateaus sind.

Vorteilhafterweise stehen die die Luft-Zuführdrosseleinrichtungen enthaltenden Dämpfertaschen unter Luft-Zuführdruck, der somit auch unmittelbar in die durch die Dämpferplateaus gebildeten Squeeze-Flächen bzw. -Spalte wirkt. Die Dämpfertaschen stehen je über ihre gesamte Fläche unter Luft-Zuführdruck. Die sogenannte Ersatzsteifigkeit des kompressiblen Luftvolumens in den Dämpfertaschen ist gegenüber den bekannten Systemen, bei denen nur der halbe Luftdruck herrscht, wegen der höheren spezifischen Dichte des in den Squeeze-Flächen eingesperrten Luftvolumens verdoppelt. Die Gefahr der Instabilität ist durch die hiermit erzielte größere Dämpferwirkung beträchtlich reduziert. Die Laufspiele aerostatischer Lagerungen können deshalb erhöht werden. Da der Luftdurchsatz mit der dritten Potenz der Laufspielvergrößerung ansteigt, sind bezüglich der Thermostabilität wesentlich höhere Umfangsgeschwindigkeiten im Luftspalt möglich. Höhere Umfangsgeschwindigkeiten bei gleicher Drehzahl bedeuten aber kleinere elastische Nachgiebigkeiten der Wellen und der Umgebungskonstruktion, so daß das erfindungsgemäße Lagersystem für höhere Lagerkräfte und somit für höhere Zerspanungsleistungen bei einem bevorzugten Einsatz in Werkzeugmaschinen geeignet ist.

Wie bereits erwähnt, neigen Luftlagersysteme zu selbsterregten Schwingungen, bedingt durch Pfeifenschwingungen in den von kompressibler Luft gefüllten Leitungs- und Taschenräumen. Der Schwingungsvorgang kann durch eine Differentialgleichung dritter Ordnung beschrieben werden mit einer reelen und zwei konjugiert komplexen Lösungen. Hierbei spielt das kompressible Volumen der verschiedenen Lufträume eine bedeutende Rolle. Die luftführenden Kanäle sollten daher möglichst kleinvolumig ausgeführt sein. Dieser Forderung entspricht im allgemeinen der damit einhergehende fertigungstechnische Aufwand. Vorteilhafterweise sind in Verbindungsleitungen von den Luft-Zuführeinrichtungen zu den zugehörigen Lagertragtaschen möglichst nah bei den Lagertragtaschen Rückschlagventile angeordnet zur Verringerung des Kompressionsvolumens der Lagertragtaschen.

Bei einem erfindungsgemäß ausgebildeten Axiallager für Wellen sind die Lagertragtaschen und Dämpfertaschen, die in den stirnseitigen Lagerkörpern angeordnet sind, in ihrer Verdrehlage um einen vorgegebenen Winkel versetzt angeordnet. Bevorzugterweise sind sie derart versetzt, daß die Verbindungskanäle von den Luft-Zuführdrosseleinrichtungen des einen Lagerkörpers zu den Lagertragtaschen des anderen Lagerkörpers durch einfache, axial verlaufende Verbindungsleitungen bzw. Axialbohrungen gebildet werden können. Im gleichen Lagerkörper ist vorzugsweise jeweils eine Lagertragtasche neben einer Dämpfertasche angeordnet, so daß sich über einen ringförmigen Lagerkörper eine alternierende Anordnung und damit einhergehende gleichmäßige Verteilung der Lagertragtaschen und Dämpfertaschen über die Lagerfläche ergibt.

Die Lösung der zuvor genannten Differentialgleichung zeigt auch, daß bei der Ausschlagsamplitude der selbsterregten Schwingung die Massen der schwingenden Teile einen großen Einfluß haben. Je kleiner die schwingende Masse, desto kleiner die selbsterregte Schwingungsamplitude. Diesem Umstand trägt die

Ausbildung gemäß Anspruch 13 Rechnung.

Das Niedrighalten der schwingenden Masse ist bei Motorspindeln besonders problematisch, weil das Gewicht des Motorenläufers die Spindelmasse erhöht. Beim Axiallager muß hier das gesamte Spindelgewicht in die Rechnung einbezogen werden, weshalb die Axialschwingung beispielsweise einer luftgelagerten Arbeitsspindel besonders kritisch ist. Bei Radiallagern muß nur der dem Lager zugehörige Anteil der Spindelmasse berücksichtigt werden. Vorteilhafterweise ist der Motorenläufer zwischen den Radiallagern angeordnet. Hierdurch kann der Gewichtsanteil des Läufers auf die Lager etwa halbiert werden.

Vorteilhaft ist hierbei auch, daß der Motor mit der Lagerabluft gekühlt werden kann, was besonders bei Hochfrequenz-Asynchronmotoren wichtig ist, die für den C-Achsen-Betrieb ein ausreichend hohes Haltemoment entwickeln. Hochfrequenz-Synchronmotoren haben demgegenüber den Vorteil der geringen Läufertemperaturen, weshalb hier eine gute Thermostabilität des aerostatischen Lagersystems gewährleistet werden kann.

Bevorzugte Ausführungsbeispiele der Erfindung werden nachfolgend anhand von Figuren erläutert. Es zeigen:
- Figur 1: ein Radiallager mit einem aerostatischen Lagersystem in einer schematischen Längsschnittdarstellung,
- Figur 2: eine ausschnittsweise Draufsicht auf die Lagerfläche des Lagerkörpers nach Figur 1 zusammen mit einer Querschnittsdarstellung dieses Lagers,
- Figur 3: eine Draufsicht auf eine Lagertragtasche mit daneben angeordneter Dämpfertasche des Lagers nach den Figuren 1 und 2,
- Figur 4: die Lagerfläche eines Lagerkörpers eines Axiallagers,
- Figur 5: eine Wellenlagerung mit einem Radiallager nach den Figuren 1 bis 3 und einem Axiallager nach Figur 4, und
- Figur 6: eine Querschnittsdarstellung einer Motorspindel mit Lagern nach den Figuren 1 bis 5.

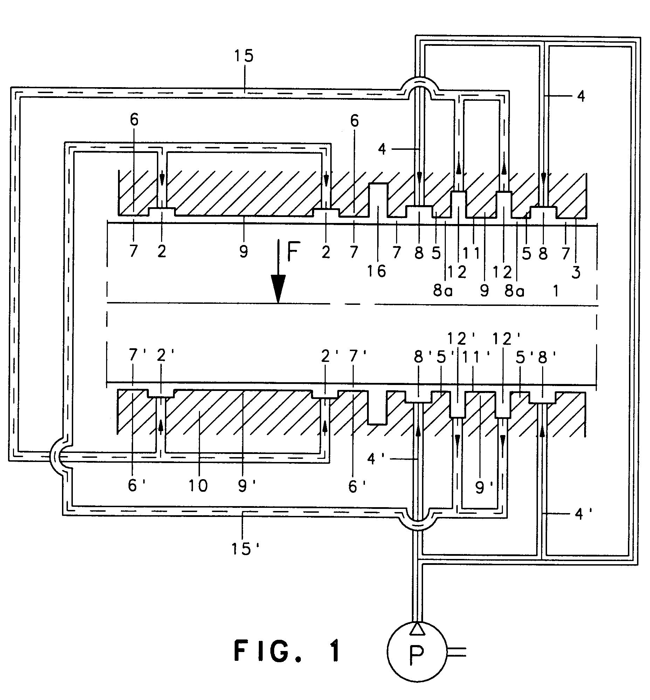

Figur 1 zeigt im Längsschnitt ein Radialwellenlager mit einem aerostatischen Lagersystem. Eine Welle 1 ist in einer eine Lagerfläche 3 bildenden Lagerbohrung eines Lagerkörpers 10 drehbar gleitgelagert. In einen Laufspalt 8a zwischen der Oberfläche der Welle 1 und der Lagerfläche 3 des Lagerkörpers 10 wird Druckluft, die von einer Pumpe P geliefert wird, über geeignet angeordnete Luftkanäle in den Laufspalt 8a hinein geführt, durch den Laufspalt 8a hindurch gepresst und über geeignete Luft-Abführkanäle wieder in die Umgebung abgeführt.

In der Lagerfläche 3 sind Lagertragtaschen 2, 2' eingearbeitet. Die Lagertragtaschen 2, 2' sind in einem streifenförmigen Bereich über den gesammten Umfang der Lagerfläche 3 gleichmäßig verteilt angeordnet. In Figur 1 sind in Umfangsrichtung verlaufende Nuten der Lagertragtaschen 2 und 2' eingezeichnet. Die Bezeichnung ist dabei so gewählt, daß eine mit 2' bezeichnete Lagertragtasche sich auf der Gegenseite der Lagertragtasche 2 befindet, also gerade um 180° demgegenüber versetzt angeordnet ist. Zwischen ihren Nuten sind in den Lagertragtaschen 2, 2' Dämpferplateaus 9, 9' gebildet, die als Squeeze-Flächen wirksam werden.

In einem streifenförmigen Bereich der Lagerfläche 3 neben den Lagertragtaschen 2, 2' sind Luft-Zuführdrosseleinrichtungen 5 und 5' für die Lagertragtaschen 2 und 2' ausgebildet. Auch hier bedeutet die Bezeichnung 5', daß die Luft-Zuführdrosseleinrichtung 5' auf der Gegenseite ihrer zugehörigen Lagertragtasche 2 und somit auch auf der Gegenseite der Luft-Zuführdrosseleinrichtung 5 angeordnet ist. Die Luft-Zuführdrosseleinrichtungen 5 und 5' sind in Dämpfertaschen 8 angeordnet, von denen in Figur 1 die in Umfangsrichtung verlaufenden nutenförmigen Taschenbereiche dargestellt sind. Innerhalb der Dämpfertaschen 8 und 8' sind in die Lagerfläche 3 weitere, in Umfangsrichtung verlaufende nutenförmige Taschen 12 und 12' eingearbeitet. Die zwischen den Taschen 8 und 12 bzw. 8'und 12'verbleibenden Stege bilden ebenfalls als Squeeze-Flächen wirksam werdende Dämpferplateaus 5, 11, 5', 11'.

Die Lagertragtaschen 2 und 2' und die in Wellenlängsrichtung gesehen daneben angeordneten Dämpfertaschen 8 und 8' sind durch einen umlaufenden Kanal 16 getrennt, über den die Luft im Laufspalt zur Umgebung abgeführt wird.

Druckluft gelangt von einer Pumpe P oder einem Druckluftreservoir über ein Druckluftleitungssystem in Druckluftkanäle 4 und 4', die in die Dämpfertaschen 8 und 8' münden. Die Dämpfertaschen 8 und 8' stehen über ihre gesamte Fläche unter Luftzuführdruck. Von den Dämpfertaschen 8 und 8' aus strömt die Luft zu einem Teil über Ablußspalte 7, die zwischen der Wellenoberfläche und der Lagerfläche 3 des Lagerkörpers 10 gebildet sind, zur Umgebung ab. Der andere Teil strömt in das Innere der Dämpfertaschen 8 und 8', in die Nuten 12 und 12' und von dort über in die Nuten 12 und 12' mündende Luftkanäle 15 und 15', die wiederum in den Nuten der Lagertragtaschen 2 und 2' münden, ab. Auf diese Weise ist die Dämpfertasche 8 mit der auf der Gegenseite der Lauffläche des Lagerkörpers 10 angeordneten Lagertragtasche 2' verbunden. Zu den weiteren Lagertragtaschen, beispielsweise 2, besteht keine derartige Verbindung. Sinngemäß gilt das gleiche für die Verbindung zwischen der Dämpfertasche 8' und der Lagertragtasche 2.

Wirkt nun eine Kraft auf die Welle 1, beispielsweise deren Eigengewicht F, so wird die Welle 1 in Richtung der Kraft F aus ihrer zentrischen Lage in Richtung auf die Lagertragtasche 2' und die auf der gleichen Seite der Lagerfläche des Lagerkörpers 10 angeordnete Dämpfertasche 8' zu bewegt, so daß sich der Laufspalt an dieser Seite der lagerkörperseitigen Lagerfläche 3 verkleinert und auf der Gegenseite, bei der Lagertragtasche 2 und der Dämpfertasche 8 vergrößert. Es kann wegen der Laufspaltvergrößerung an der Gegenseite mehr Luft über die Luft-Zuführdrosseleinrichtung 5 zur Lagertragtasche 2' geführt werden. Eine höhere Luftversorgung der Squeeze-Fläche dieser Lagertragtasche 2' ist somit gewährleistet. Die Zuführdrosseleinrichtung 5' hingegen kann der Lagertragtasche 2 weit weniger Luft zur Verfügung stellen, so daß dort der Luftgegendruck abgebaut wird. Einer Berührung zwischen der Welle 1 und dem Lagerkörper 10 an der Seite der Lagertragtaschen 2' wirkt auch die Quetschfilmdämpferwirkung der als Squeeze-Flächen wirksam werdenden Dämpferplateaus 9' und 11 entgegen; auch die Zufürdrosseleinrichtung 5' wirkt als Squezze-Fläche. Durch die erfindungsgemäße Gegenkopplung von Lagertragtasche einerseits und zugehöriger, d.h. damit in Luftdruckverbindung stehender Dämpfertasche andererseits kann die Steifigkeit und Dämpfungswirkung und somit auch die Tragfähigkeit eines aerostatischen Lagersystems erheblich erhöht werden.

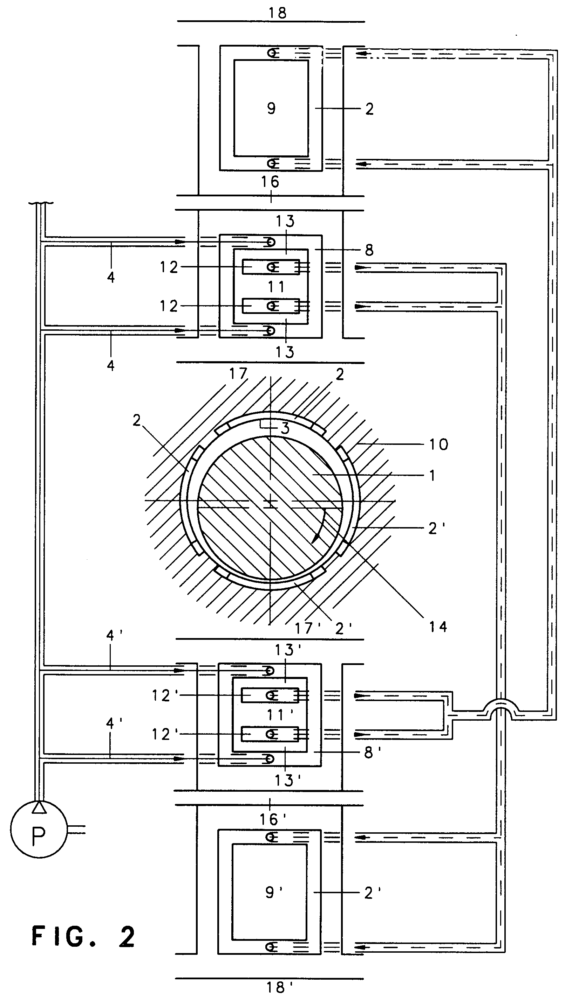

Die beschriebene Situation der Wellenverlagerung ist im Querschnitt von Figur 2 dargestellt. Falls das aerostatische Lagersystem in einer Drehmaschine zur Spindellagerung eingesetzt wird, wechselt die Lastrichtung im Verlauf der Bearbeitung jedoch häufig. Im Ausführungsbeispiel sind über den Umfang der Lagerfläche 3 des Lagerkörpers 10 vier Lagertragtaschen 2 und 2' gleichmäßig verteilt eingearbeitet. Jede der Lagertragtaschen 2, 2' ist mit einer Dämpfertasche gekoppelt, wie dies vorstehend beschrieben wurde. Mit dem Richtungspfeil 14 ist die Drehrichtung der Welle 1 bezeichnet.

Über und unter der Querschnittsdarstellung von Figur 2 ist desweiteren je eine Draufsicht auf die Lagertragtaschen 2 und 2' sowie die jeweils zugehörigen Dämpfertaschen 8 und 8' dargestellt. Die Lagerfläche 3 ist hierzu aufgeschnitten und umgeklappt worden.

Sowohl die Lagertragtaschen 2 und 2' als auch die Dämpfertaschen 8 und 8' sind als geschlossene Rechtecknuten in die Lagerfläche 3 des Lagerkörpers 10 eingearbeitet. Innerhalb dieser rechteckförmigen Taschen sind die Dämpferplateaus 9, 9', 11, 11' ausgebildet. Die Oberflächen dieser Dämpferplateaus werden durch die Lagerfläche des Lagerkörpers 10 gebildet und sind wie diese ebenbearbeitet. Die Dämpferplateaus 9 und 9' der Lägertragtaschen 2 und 2' sind als einfache Rechteckplateaus gebildet, in der Draufsicht von Figur 2 gesehen. Innerhalb der Dämpfertaschen 8 und 8' sind die in Umfangsrichtung verlaufenden Nuten 12 und 12' nahe bei den ebenfalls in Umfangsrichtung verlaufenden Seitennuten der Dämpfertaschen 8 und 8' parallel dazu eingearbeitet. Diese Ausbildung der Lagertrag- und Dämpfertaschen kommt sowohl der Aerostatik als auch der einfachen Fertigung entgegen.

Die Luft-Zuführdrosseleinrichtungen 5 und 5' werden in erster Linie durch die in Umfangsrichtung verlaufenden stegartigen Plateaubereiche 13 und 13' zwischen den Nuten 12 und den benachbarten Nutbereichen der Dämpfertaschen 8 und 8' gebildet. Als Squeeze-Fläche der Dämpfertaschen 8 und 8' ist jedoch der gesamte Plateaubereich innerhalb der Dämpfertaschen 8 und 8' einschließlich der als Drosseln dienenden Bereiche 5 und 5' wirksam.

Die Luftzuführ- und -abführkanäle zu den Lagertragtaschen 2 und 2' und den Dämpfertaschen 8 und 8' führen jeweils in die in Umfangsrichtung verlaufenden Bereiche der Taschen und Nuten innerhalb der Taschen.

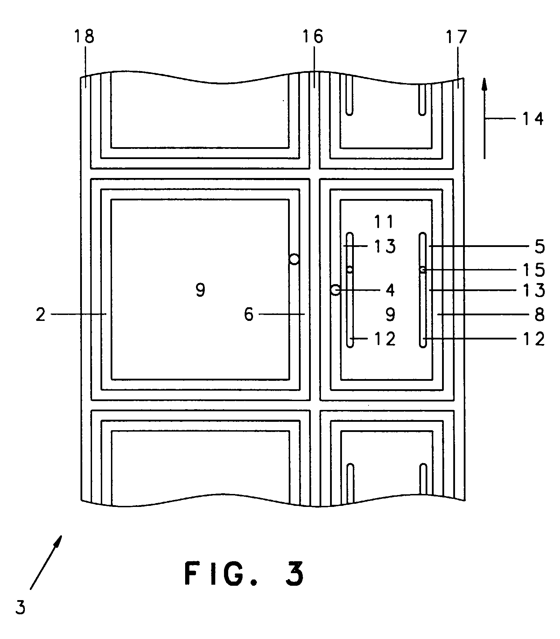

Figur 3 zeigt einen Ausschnitt aus der in die Blattebene aufgewickelten

Lagerfläche des Lagerkörpers 10. Rechts daneben ist der Richtungspfeil 14 für die Lagerbewegung eingezeichnet.

Sämtliche in die Lagerfläche 3 eingearbeiteten Nuten verlaufen in Umfangsrichtung oder in Axialrichtung dieser Lauffläche. Die Lagertragtaschen 2 und Dämpfertaschen 8 sind jeweils allseitig von Abführkanälen 16, 17 und 18 umgeben. Über diese Abführkanäle 16, 17 und 18 wird die Luft aus dem Lagerspalt zwischen der Welle 1 und der Lagerfläche 3 des Lagerkörpers 10 abgeführt und auf Umgebungsdruck entspannt. Gleichzeitig werden dadurch benachbarte Taschen strömungstechnisch entkoppelt. In dieser Darstellung ist besonders deutlich zu erkennen, daß die Luft-Zuführdrosseleinrichtung 5 zwei Drosseln für die dazugehörige Lagertragtasche 2 besitzt, die durch die schmalen Stegbereiche 13 des Dämpferplateaus 11 zwischen den in Bewegungsrichtung 14 verlaufenden Nutbereichen der Dämpfertasche 8 und den dazu parallel verlaufenden, innerhalb der Dämpfertasche 8 liegenden Luftabführnuten 12 gebildet wird. Die Dämpfertaschen 8 und 8' bzw. deren Nuten sind so dimensioniert, daß bei zentrischer, unbelasteter Lage des Lagersystems der Luftdruck in der zugehörigen Lagertragtasche 2 und 2' 40 bis 60 % des Luftzuführdruckes in die zugehörige Luft-Zuführdrosseleinrichtung 5 bis 5' beträgt.

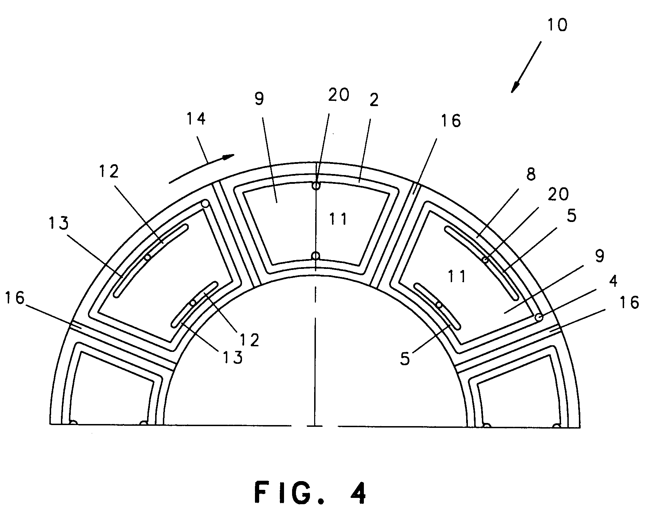

Figur 4 ist eine Draufsicht auf die Lagerfläche des Lagerkörpers 10 eines Axiallagers. Mit 14 ist wieder die Bewegungsrichtung der darauf laufenden Welle bezeichnet. In die ringförmige Lagerfläche sind in Bewegungsrichtung 14 gesehen jeweils abwechselnd nebeneinander Lagertragtaschen 2 und Dämpfertaschen 8 eingearbeitet. Zwei benachbarte Taschen werden jeweils durch einen radial sich über die gesamte Lagerfläche erstreckenden Abführkanal 16, über den die Luft nahezu drosselfrei zur Umgebung abströmen kann, getrennt. Die Taschen 2 und 8 werden durch geschlossene Nuten gebildet, die in Nachbildung der Lagenringfläche in Bewegungsrichtung 14 verlaufende innere und äußere Nutbereiche und diese jeweils miteinander verbindende radiale Nutbereiche aufweist. Die Nuten 12 verlaufen ebenfalls in Bewegungsrichtung 14 parallel und nahe bei den entsprechenden Nuten der Dämpfertaschen 8. Zwischen diesen parallelen Nuten verbleiben wieder die Drosselstege 13.

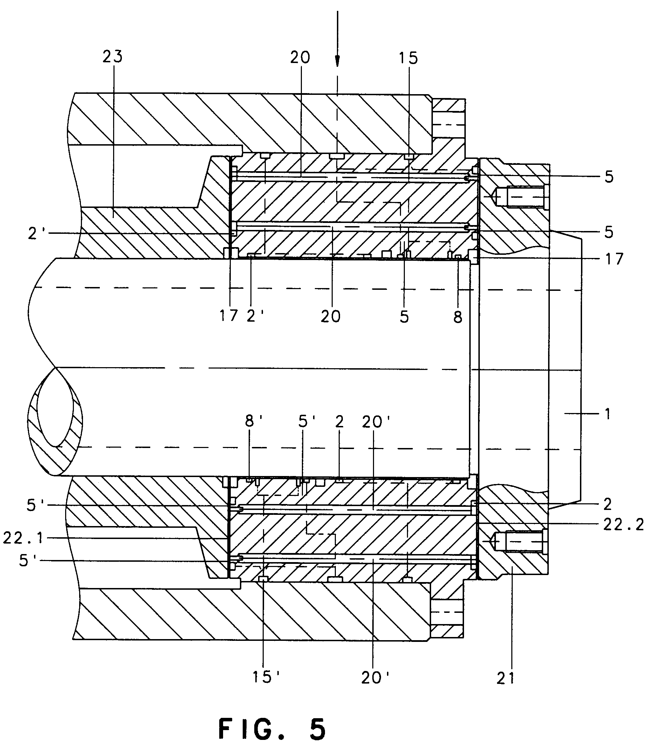

Figur 5 zeigt ein aerostatisches Radial-Axial-Lager, bei dem die Welle 1 radial und axial im und am Lagerkörper 10 jeweils drehbar gleitgelagert ist. Das zwischen der Welle 1 und dem Lagerkörper 10 gebildete Radiallager entspricht dem aerostatischen Lagersystem nach den Figuren 1 bis 3. Die Axiallagerflächen 22.1 und 22.2 des Lagerkörpers 10 entsprechen je der in Figur 4 dargestellten Lagerfläche. Die beiden Lagerflächen 22.1 und 22.2 für das Axiallager sind zueinander in solch einer Drehlage angeordnet, daß einer Lagertragtasche 2 bzw. 2' der einen Lagerfläche in Wellenaxialrichtung eine Dämpfertasche 8 bzw. 8' der anderen Lagerfläche gegenüberliegt. Durch diese Anordnung ist es möglich, Verbindungskanäle 20 bzw. 20' zwischen den zugehörigen Lagertragtaschen 2 bzw 2' und Luft-Zuführdrosseleinrichtungen 5 und 5, als einfache Axialbohrungen durch den Lagerkörper 10 auszuführen. Bei Axiallagern bedeutet der im Zusammenhang mit Radiallagern verwendete Begriff Gegenseite, daß die Lagertragtasche und ihre zugehörige Luft-Zuführdrosseleinrichtung je in der Lauffläche des gegenüberliegenden Lagerkörpers angeordnet sind, so daß die im Zusammenhang mit Radiallagern beschriebene erfindungsgemäße Gegenkopplung gegeben ist. Zwei Ringkörper 21 und 23, die mit der Welle 1 drehsteif verbunden sind, schließen in axialer Richtung den Lagerkörper 10 zwischen sich ein und bilden die Axiallaufflächen zu den Axiallagerflächen 22.1 und 22.2.

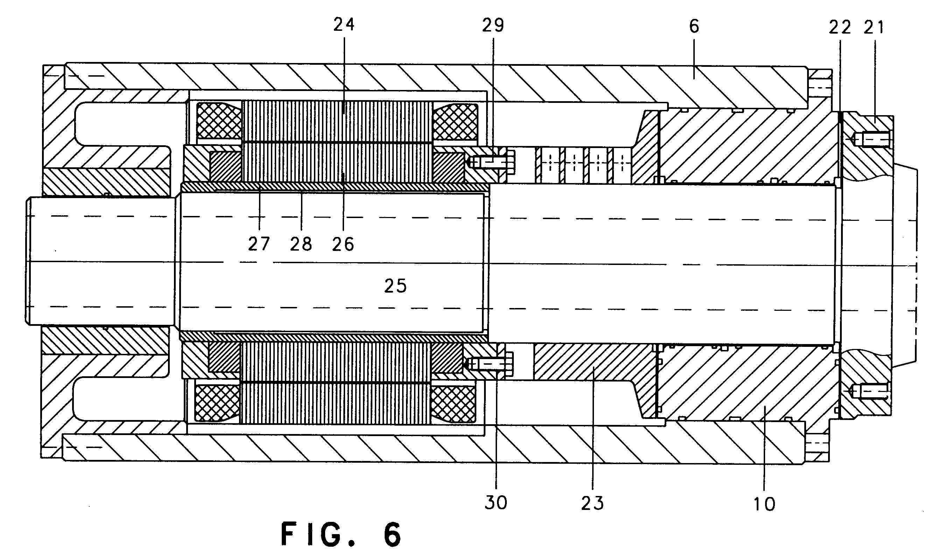

In Figur 6 ist im Langsschnitt eine Drehspindel dargestellt. Von der gesamten Welle 1 ist nur das hintere, luftgelagerte Wellenstück 25 mit dem in diesem Bereich angeordneten Hochfrequenzmotor 24 gezeichnet. Das aerostatische Radial-Axial-Lager im äußeren rechten Bereich des Wellenstücks 25 entspricht dem Lager nach Figur 5. Auf der dem Radial-Axial-Lager gegenüberliegenden Motorseite ist die Welle 1 in einem weiteren aerostatischen Radiallager nach den Figuren 1 bis 3 gelagert. Motorstator und Radiallagerkörper 10 sind drehfest mit einem Gehäuse G verbunden. Ein Motorläufer 26 sitzt drehfest auf einer Wärmeisolierhülse 27, die wiederum drehfest auf dem Wellenstück 25 befestigt ist. Zwischen dem Wellenstück 27 und der Wärmeisolierhülse 27 bleibt ein Luftspalt 28 frei. In diesen Luftspalt wird Abluft aus dem aerostatisehen Lagersystem geführt, d.h. die Lagerabluft wird zur Kühlung des Motors 24 benutzt. Bei dem im Zusammenhang mit Figur 5 erwähnten Lagerkörper 21 handelt es sich um den Spindelflansch, dessen Schulterfläche die Lauffläche zur Lagerfläche 22.2 bildet. Die Lauffläche zur anderen Axiallagerfläche 22.1 ist an einem durch einen lösbaren Schrumpfsitz auf dem Wellenstück 25 befestigten Präzisions-Schulterring 23 vorgesehen, der zur Reduzierung seiner Masse aus einer hochfesten Aluminium- oder einer Titanlegierung besteht. Bei dem Motor 24 kann es sich um einen Hochfrequenz-Asynchrommotor oder -Synchronmotor handeln. Der Motorläufer 26 ist stirnseitig über eine Drehmoment-Mitnahme 29 mit dem Präzisions-Schulterring 23 verbunden. Einer bevorzugten Ausführungsform entsprechend ist zwischen dem Motorläufer 26 und dem Präzisions-Schulterring 23 eine Wärmeisolierung 30 vorgesehen, um die Wärmeeinleitung vom Motor in das Lager zu vermindern.

## Patentansprüche

1. Aerostatisches Lagersystem mit Umgriff
a) mit einer Welle (1) oder einer Tragleiste und einem eine Lagerfläche (3) für die Welle (1) oder die Tragleiste aufweisenden Lagerkörper (10),
b) mit Lagertragtaschen (2, 2') in der Lagerfläche (3),
c) mit Luft-Zuführdrosseleinrichtungen (5, 5') für die Lagertragtaschen (2, 2') und
d) mit Abflußspalten (7, 7'), die durch die um die Lagertragtaschen (2, 2') angeordnete Taschenstege (6, 6') gebildet werden,
**dadurch gekennzeichnet,** daß
e) die Luft-Zuführdrosseleinrichtungen (5, 5') durch wenigstens einen Lagerspalt (8a) zwischen der Welle (1) oder der Tragleiste und der Lagerfläche (3) des Lagerkörpers (10) gebildet werden,
f) die Luft-Zuführdrosseleinrichtungen (5, 5') jeweils auf den Gegenseiten ihrer zugehörigen Lagertragtasche (2, 2') in Dämpfertaschen (8, 8') neben den Lagertragtaschen (2, 2') angeordnet sind, und daß
g) sowohl in den Lagertragtaschen (2, 2') als auch in den Dämpfertaschen (8, 8') von der Luft durchströmte und als Squeeze-Flächen wirksame Dämpferplateaus (9, 9', 11, 11') ausgebildet sind.

2. Aerostatisches Lagersystem nach Anspruch 1, dadurch gekennzeichnet, daß die Squeeze-Flächen der Dämpferplateaus (9, 9', 11, 11') mit dem Luftzuführdruck in das Lagersystem in Verbindung stehen.

3. Aerostatisches Lagersystem nach Anspruch 1 oder 2, dadurch gekennzeichnet, daß die Luft-Zuführdrosseleinrichtungen (5, 5') in die Dämpferplateaus (11, 11') der Dämpfertaschen (8, 8') eingearbeitet sind, vorzugsweise als von zwei Nuten (12, 12') und den Dämpfertaschen (8, 8') begrenzte Drosselstege (13, 13').

4. Aerostatisches Lagersystem nach einem der vorhergehenden Ansprüche, dadurch gekennzeichnet, daß sich die Nuten (12, 12') der Luft-Zuführdrosseleinrichtungen (5, 5') in Bewegungsrichtung (14) der Lagerung erstrecken.

5. Aerostatisches Lagersystem nach einem der vorhergehenden Ansprüche, dadurch gekennzeichnet, daß im Lagerkörper (10) Verbindungsleitungen (15, 15', 20, 20') ausgebildet sind, die durch die Luft-Zuführdrosseleinrichtungen (5, 5') auf statisch niedrigeren Druck gedrosselte Luftströme den jeweils zugehörigen Lagertragtaschen (2, 2') auf der Gegenseite der Lagerfläche des Lagerkörpers (10) zuführen.

6. Aerostatisches Lagersystem nach einem der vorhergehenden Ansprüche, dadurch gekennzeichnet, daß pro Dämpfertasche (8, 8') zwei Luft-Zuführdrosseleinrichtungen (5, 5') vorgesehen sind.

7. Aerostatisches Lagersystem nach einem der vorhergehenden Ansprüche, dadurch gekennzeichnet, daß die Lagertragtaschen (2, 2') und die Dämpfertaschen (8, 8') von Kanälen (16, 17, 18, 16', 17', 18'), vorzugsweise allseitig, umgeben sind, die mit der unter Atmosphärendruck stehenden Umgebung in weitgehend drosselfreier Verbindung stehen.

8. Aerostatisches Lagersystem nach einem der vorhergehenden Ansprüche, dadurch gekennzeichnet, daß die Stegbreiten und Steglängen der Luft-Zuführdrosseleinrichtungen (5, 5') so dimensioniert sind, daß bei zentrischer, unbelasteter Lage des Lagersystems der Luftdruck in den Lagertragtaschen (2, 2') 40 bis 60 % des Luftzuführdruckes in die Luft-Zuführdrosseleinrichtungen (5, 5') beträgt.

9. Aerostatisches Lagersystem nach einem der vorhergehenden Ansprüche in der Form eines Wellenaxiallagers, dadurch gekennzeichnet, daß die sich gegenüberliegenden Lagertragtaschen (2, 2') und Dämpfertaschen (8, 8') in ihrer Verdrehlage so gegeneinander versetzt angeordnet sind, vorzugsweise um eine halbe Umfangsteilung, daß Verbindungsleitungen (20, 20') von den Luft-Zuführdrosseleinrichtungen (5, 5') zu den jeweils zugehörigen Lagertragtaschen (2, 2') als einfache Axialbohrungen ausgebildet sein können.

10. Aerostatisches Lagersystem nach dem vorhergehenden Anspruch, dadurch gekennzeichnet, daß in der Lagerfläche (3) des Lagerkörpers (21, 23) in Bewegungsrichtung (14) der Lagerung gesehen jeweils eine Lagertragtasche (2, 2') neben einer Dämpfertasche (8, 8') angeordnet ist.

11. Aerostatisches Lagersystem nach einem der vorhergehenden Ansprüche, dadurch gekennzeichnet, daß in Verbindungsleitungen (15, 15', 20, 20') von den Luft-Zuführdrosseleinrichtungen (5, 5') zu den jeweils zugehörigen Lagertragtaschen (2, 2') möglichst nahe bei den Lagertragtaschen (2, 2') Rückschlagventile vorgesehen sind, zur Verringerung des Kompressionsvolumens der Lagertragtaschen (2, 2').

12. Aerostatisches Lagersystem nach einem der vorhergehenden Ansprüche, dadurch gekennzeichnet, daß bei Verwendung für ein Wellenaxiallager als Gegenaxialschulterfläche (bei 22.2) zu einer Spindelflanschschulterfläche (bei 22.1) ein durch einen lösbaren Schrumpfsitz aufder Welle (1) befestigter Präzisions-Schulterring (23) vorgesehen ist.

13. Aerostatisches Lagersystem nach dem vorhergehenden Anspruch, dadurch gekennzeichnet, daß der Präzisions-Schulterring (23) zur Reduzierung der Masse aus einer hochfesten Aluminium- oder Titanlegierung besteht.

14. Aerostatisches Lagersystem nach einem der vorhergehenden Ansprüche, dadurch gekennzeichnet, daß bei Ausbildung der Welle als Motorspindel ein zwischen zwei Radiallagern angeordneter Hochfrequenz-Motor (24) vorgesehen ist.

15. Aerostatisches Lagersystem nach dem vorhergehenden Anspruch, dadurch gekennzeichnet, daß ein Hochfrequenz-Asynchronmotor (24) vorgesehen ist.

16. Aerostatisches Lagersystem nach Anspruch 14, dadurch gekennzeichnet, daß ein Hochfrequenz-Synchronmotor (24) vorgesehen ist.

17. Aerostatisches Lagersystem nach einem der Ansprüche 14 bis 16, dadurch gekennzeichnet, daß zwischen der Welle (1) im Bereich des Hochfrequenz-Motors (24) und dem Motorenläufer (26) eine Wärmeisolierhülse (27) vorgesehen ist, die einen Luftspalt (28) zwischen der Welle (1) und dem Motorenläufer (26) ausbildet.

18. Aerostatisches Lagersystem nach dem vorhergehenden Anspruch, dadurch gekennzeichnet, daß in den Luftspalt (28) zwischen der Welle (1) und dem Motorenläufer (26) Abluft aus dem aerostatischen Lagersystem zu Kühlzwecken geführt wird.

19. Aerostatisches Lagersystem nach einem der Ansprüche 14 bis 18, dadurch gekennzeichnet, daß zwischen dem Präzisions-Schulterring (23) und dem Motorenläufer (26) eine Drehmoment-Mitnahme (29) vorgesehen ist.

20. Aerostatisches Lagersystem nach einem der Ansprüche 14 bis 19, dadurch gekennzeichnet, daß zwischen dem Präzisions-Schulterring (23) und dem Motorenläufer (26) eine wärmeleitisolierte Drehmoment-Mitnahme (29, 30) vorgesehen ist.
